# FASCICULE DE BREVET EUROPEEN

(11) **EP 2 883 341 B1**
(45) Date de publication et mention de la délivrance du brevet: **31.08.2022**
(21) Numéro de dépôt: 13740245.9
(22) Date de dépôt: 19.07.2013
(51) Int. Cl.: H04L 67/51, H04L 9/40, H04L 69/08

(54) **DISPOSITIF ET PROCEDE DE MISE A DISPOSITION DE SERVICES DANS UN RESEAU DE COMMUNICATION**
VORRICHTUNG UND VERFAHREN ZUR BEREITSTELLUNG VON DIENSTEN IN EINEM KOMMUNIKATIONSNETZ
DEVICE AND METHOD FOR PROVIDING SERVICES IN A COMMUNICATION NETWORK

(30) Priorité: 08.08.2012 FR 1257706
(43) Date de publication de la demande: 17.06.2015
(73) Titulaire: SAGEMCOM BROADBAND SAS, 92500 Rueil Malmaison (FR)
(72) Inventeur: VIVIEN, Nicolas, F-92500 Rueil Malmaison (FR)
(74) Mandataire: Cabinet Le Guen Maillet
(86) Numéro de dépôt international: PCT/EP2013/065257
(87) Numéro de publication internationale: WO 2014/023550

(56) Documents cités:
- EP-A1- 2 444 925
- WO-A2-2008/086504
- US-A1- 2002 112 058
- US-A1- 2007 118 496
- US-A1- 2011 153 790
- KIM M J ET AL: "Service discovery using volunteer nodes for pervasive environments", PERVASIVE SERVICES, 2005. ICPS '05. PROCEEDINGS. INTERNATIONAL CONFERE NCE ON SANTORINI, GREECE JULY 11-14, 2005, PISCATAWAY, NJ, USA,IEEE, 11 July 2005 (2005-07-11), pages 188-197, XP010834826, DOI: 10.1109/PERSER.2005.1506410 ISBN: 978-0-7803-9032-4

## Description

La présente invention concerne la mise à disposition, dans un réseau de communication, d'au moins un service à au moins un client connecté audit réseau de communication.

De manière à simplifier la mise en communication automatique de dispositifs via un réseau de communication, et de manière à renforcer l'interopérabilité de ces dispositifs, il existe des protocoles dans lesquels des dispositifs annoncent, d'eux-mêmes ou sur requête, chaque service qu'ils mettent à disposition via le réseau de communication.

On notera par exemple le protocole SMB (« Server Message Block » en anglais) ou CFIS (« Common Internet File System » en anglais) permettant le partage de ressources, comme des imprimantes ou des répertoires, via des réseaux de communication. Sur la base du protocole NETBIOS (« Network Basic Input/Output System » en anglais) sur TCP/IP (« Transmission Control Protocol over Internet Protocol» en anglais), tel que défini dans les documents normatifs RFC 1001 et RFC 1002, des dispositifs annoncent les services, par exemple d'impression, qu'ils mettent à disposition via le réseau de communication. Ce principe est appelé *browsing* dans le contexte du protocole NETBIOS sur TCP/IP.

On pourra aussi noter par exemple la solution AirPlay (marque déposée) de la société Apple Inc., dans laquelle des dispositifs publient les services qu'ils mettent à disposition via le réseau de communication, en utilisant le protocole mDNS-SD (« Multicast Domain Name System - Service Discovery » en anglais).

On pourra enfin noter par exemple le protocole UPnP (« Universal Plug n' Play » en anglais) promulgué par l'UPnP Forum, reposant sur la mise en œuvre du protocole SSDP (« Simple Service Discovery Protocol » en anglais) pour annoncer la mise à disposition de services via le réseau de communication.

Le document US 2002/112058 décrit un dispositif d'hébergement qui implémente le protocole UPnP. Il met notamment en œuvre le protocole SSPD pour annoncer la mise à disposition de services.

Le document US 2007/118496 décrit des opérations de mapping entre services et dispositifs, lesquelles sont mises en œuvre après que le fichier de description de services a été reçu et a été enregistré par une passerelle.

Le document de Kim et al intitulé « Service discovery using volunteer nodes for pervasive environments » décrit un procédé de découverte de service utilisant des nœuds particuliers, dits nœuds volontaires, ledit procédé de découverte mettant en œuvre une annonce sélective des services.

Le terme *service* réfère à un ensemble de fonctionnalités qui sont mises à la disposition, par un dispositif d'un réseau de communication, d'autres dispositifs du réseau de communication, ainsi qu'à un ensemble de règles contrôlant leur utilisation.

Cependant, de telles annonces sur requête ou pas, permettent à des clients d'accéder à des services auxquels ils ne devraient *a priori* pas avoir accès. Notamment certains logiciels présents sur des ordinateurs personnels (PC pour « Personal Computer » en anglais) connectés à des réseaux locaux LAN (« Local Area Network » en anglais), tels que des logiciels de téléchargement poste-à-poste (« Peer-to-Peer » en anglais), profitent que les services de passerelle domestique soient annoncés sur le réseau LAN pour accéder à ces services afin de modifier les règles de pare-feu et ainsi permettre à ce qu'un poste au-delà de la passerelle puisse accéder à un autre poste sur le réseau LAN. Cela crée une brèche de sécurité qu'il convient de pallier.

De plus, de telles annonces sur requête ou pas, permettent à un utilisateur d'accéder à des services par le biais de clients qui peuvent ne pas être adaptés à la gestion de ces services. En effet, ces annonces étant automatiquement mises en œuvre, l'utilisateur peut accéder à ces services via un client ne disposant pas de toute l'interface nécessaire pour permettre à l'utilisateur de mesurer l'impact de configurations ou reconfigurations de fonctionnalités relatives à ces services.

Il est donc souhaitable de palier ces inconvénients de l'état de la technique.

L'invention concerne un dispositif destiné à mettre à disposition au moins un service, dans un premier réseau de communication, à au moins un client connecté audit premier réseau de communication, selon la revendication indépendante 1.

Selon un mode de réalisation particulier, le dispositif comporte : des moyens pour recevoir une requête d'accès à un dit service ; des moyens pour déterminer le type d'un client ayant émis ladite requête d'accès ; et des moyens pour décider d'autoriser ou pas audit client l'accès audit service, en fonction desdites règles prédéterminées et dudit type dudit client. Ainsi, si un client tente d'accéder à un service qui ne correspond pas à son type, sa requête est rejetée.

Selon un mode de réalisation particulier, le dispositif comporte : des moyens pour recevoir une requête de désactivation des services mis à disposition par ledit dispositif ; des moyens pour déterminer le type d'un client ayant émis ladite requête de désactivation des services ; et des moyens pour désactiver, en réponse à ladite requête de désactivation des services, les services associés, selon lesdites règles prédéterminées, audit type dudit client. Ainsi, la désactivation des services peut n'être que partielle. Comme un client peut requérir une désactivation de tous les services - car il n'a connaissance que des services auxquels son type correspond, cela permet de maintenir les autres services actifs pour d'autres clients.

Selon un mode de réalisation particulier, le dispositif comporte : des moyens pour recevoir une requête de description de services ; des moyens pour déterminer le type d'un client ayant émis ladite requête de description de services ; des moyens pour construire ladite description de services en fonction dudit type du client ; et des moyens pour transmettre la description de services construite, en réponse à ladite requête. Ainsi, sur requête d'un client, le dispositif adapte la description de services à ceux qui correspondent au type de ce client.

Selon un mode de réalisation particulier, les moyens pour obtenir, pour chaque client, le type du client sont adaptés pour déterminer le type d'au moins un client en fonction : d'adresses MAC dans des trames Ethernet échangées via le premier réseau de communication ; et/ou d'options comprises dans des messages DHCP échangés via le premier réseau de communication ; et/ou de séquences de trames échangées via le premier réseau de communication. Ainsi, cela permet une configuration automatique.

Selon un mode de réalisation particulier, le dispositif est un dispositif d'interconnexion ou est destiné à être intégré dans un dispositif d'interconnexion, ledit dispositif d'interconnexion étant destiné à interconnecter ledit premier réseau de communication avec un second réseau de communication, chaque service étant relatif à une interface dudit dispositif d'interconnexion avec ledit second réseau de communication. Ainsi, cela permet de limiter des reconfigurations indésirables des interfaces du dispositif d'interconnexion, comme par exemple les interfaces physiques ou logiques avec Internet d'une passerelle domestique.

Selon un mode de réalisation particulier, le dispositif comporte des moyens pour recevoir via le second réseau de communication une information indiquant le type d'au moins un client connecté audit premier réseau de communication. Ainsi, la configuration automatique de la gestion des services par le dispositif est améliorée.

Selon un mode de réalisation particulier, lesdits services sont conformes à la norme UPnP.

L'invention concerne également un procédé de mise à disposition d'au moins un service, dans un réseau de communication, à au moins un client connecté audit réseau de communication selon la revendication indépendante 9.

L'invention concerne également, selon la revendication indépendante 10, un programme d'ordinateur, qui peut être stocké sur un support et/ou téléchargé d'un réseau de communication, afin d'être lu par un processeur. Ce programme d'ordinateur comprend des instructions pour implémenter l'un quelconque des procédés mentionnés ci-dessus, lorsque ledit programme est exécuté par le processeur. L'invention concerne également, selon la revendication indépendante 11, des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1A illustre schématiquement un premier système dans lequel l'invention peut être mise en œuvre ;
- la Fig. 1B illustre schématiquement un second système dans lequel l'invention peut être mise en œuvre ;
- la Fig. 2 illustre schématiquement un exemple d'architecture matérielle d'un serveur du système de la Fig. 1A ou 1B ;
- la Fig. 3 illustre schématiquement un échange de messages intervenant dans le système de la Fig. 1A ou 1B ;
- la Fig. 4 illustre schématiquement un algorithme d'annonce de services ;
- la Fig. 5 illustre schématiquement un algorithme de traitement d'une requête d'accès à un service.

Il est proposé qu'un dispositif fournisseur de services puisse décider de n'exporter, à un client ou un ensemble de clients, qu'un sous-ensemble des services qu'il propose, ce sous-ensemble étant sélectionné en fonction du type du ou des client(s).

Le type d'un client est représentatif des fonctionnalités mises en œuvre par ce client.

Ainsi, lorsqu'un client requiert que le dispositif fournisseur de services lui transmette une description des services qu'il propose, le dispositif fournisseur de services établit cette liste en fonction du type du client. Le client n'est alors mis en connaissance que des services auxquels, selon des règles prédéterminées au sein du dispositif fournisseur de services, il est autorisé à accéder. Le même principe peut être appliqué lorsque le dispositif fournisseur de services annonce de lui-même au(x) client(s) les services qu'il propose. Lorsque plusieurs clients sont concernés, le dispositif fournisseur de services peut n'inclure dans la description de ses services que ceux qui sont en commun pour les clients, selon lesdites règles prédéterminées, d'après les types respectifs des clients.

La suite de la description s'attache plus particulièrement à l'exportation de descriptions de services dans le cadre du protocole UPnP. Il convient cependant de noter que les principes exposés ci-après peuvent être mis en œuvre dans le cadre d'autres protocoles d'annonce et de mise à disposition de services, comme par exemple les protocoles SMB et mDNS-SD déjà mentionnés.

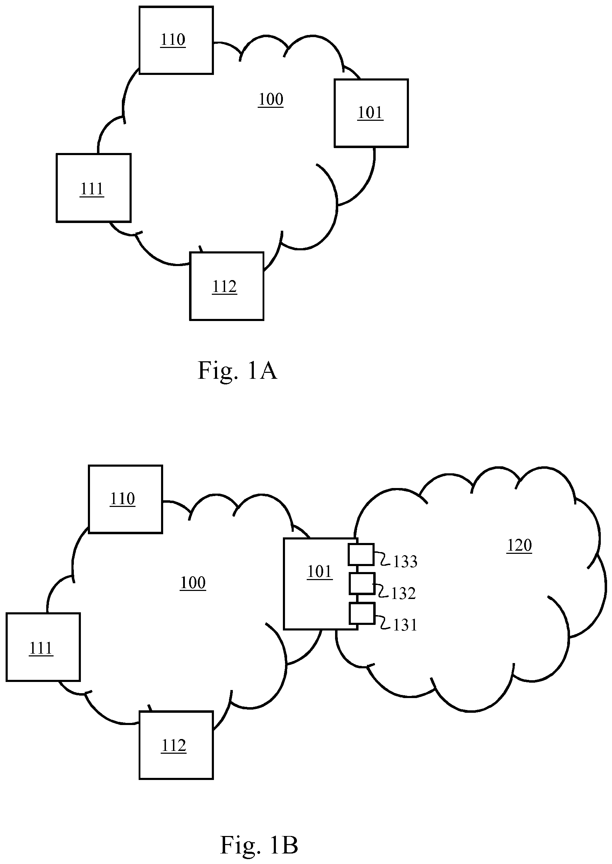

La Fig. 1A illustre schématiquement un premier système dans lequel l'invention peut être mise en œuvre.

Le système comporte un dispositif fournisseur de services 101, appelé par la suite *serveur,* mettant à disposition au moins un service via un réseau de communication 100. Le réseau de communication 100 est préférentiellement un réseau local LAN. Dans un mode de réalisation particulier, le serveur 101 met à disposition une pluralité de services. Plusieurs serveurs peuvent être mis en œuvre sur une même plate-forme matérielle connectée au réseau de communication 100. Par exemple, un serveur conforme à l'extension UPnP AV (« Audio-Video » en anglais) et un serveur conforme à l'extension UPnP IGD (« Internet Gateway Device »).

Le système comporte aussi au moins un client 110, 111, 112. De tels clients sont des dispositifs destinés à bénéficier de services mis à disposition via le réseau de communication 100 par des serveurs, comme le serveur 101. En d'autres termes, les clients sont destinés à contrôler l'exécution des services ; d'ailleurs, dans la terminologie UPnP, ces clients sont appelés *points de contrôle UPnP* (« UPnP Control Points » en anglais).

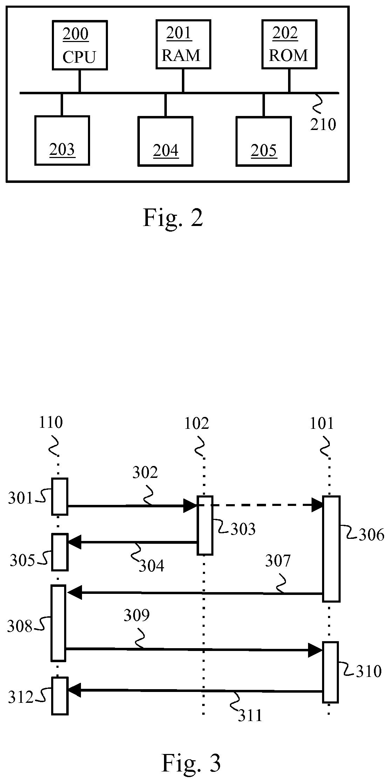

Afin de permettre aux clients 110, 111, 112 de bénéficier de ses services, le serveur 101 fournit une description de services qu'il leur met à disposition. Selon le protocole d'échange en place entre le serveur 101 et les clients 110, 111, 112, soit le serveur 101 fournit une telle description sur requête, soit de lui-même par diffusion (« broadcast » en anglais). Des échanges dans le cadre du protocole UPnP sont détaillés ci-après en relation avec la Fig. 3.

La Fig. 1B illustre schématiquement un second système dans lequel l'invention peut être mise en œuvre.

Le système de la Fig. 1B reprend les mêmes éléments que le système de la Fig. 1A. Cependant, le serveur 101 est, dans le cadre du système de la Fig. 1B, un dispositif d'interconnexion ou un élément d'un tel dispositif d'interconnexion, le dispositif d'interconnexion interconnectant le réseau de communication 100, dit premier réseau de communication, avec un second réseau de communication 120 via au moins une interface 131, 132, 133. Les interfaces 131, 132, 133 peuvent être des interfaces physiques et/ou des interfaces logiques. Par exemple, le serveur 101 est une passerelle domestique permettant de connecter un réseau LAN, correspondant au premier réseau de communication 100, à l'Internet, correspondant au second réseau de communication 120. Dans le cas de cette passerelle domestique, les interfaces 131, 132, 133 sont par exemple définies de la manière suivante :
- l'interface 131, notée TV, est dédiée à la transmission de données télévisuelles via un réseau virtuel de délivrance de contenus CDN (« Content Delivery Network » en anglais) géré par l'opérateur fournisseur d'accès à l'Internet auquel est associée la passerelle ;
- l'interface 132, notée TEL, est dédiée à la transmission de données téléphoniques via un réseau virtuel téléphonique sur IP géré par l'opérateur fournisseur d'accès à l'Internet ;
- l'interface 133, notée DATA, est dédiée à la transmission des autres données, comme par exemple les données provenant de sites Web accessibles via l'Internet.

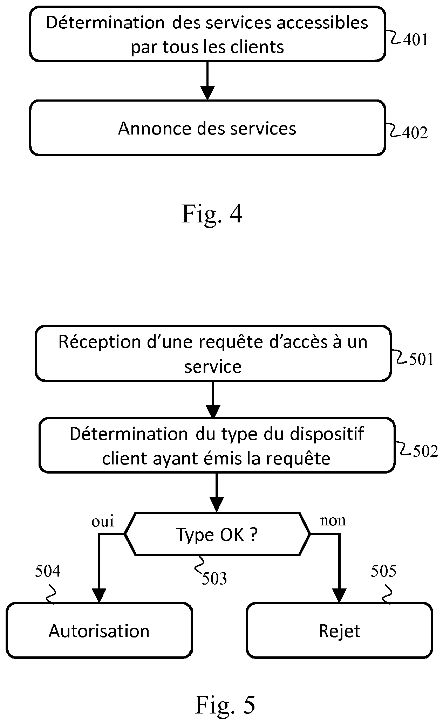

Le serveur 101 met alors à disposition, via le premier réseau de communication 100, des services qui sont associés aux interfaces 131, 132, 133. Ce sont par exemple des services de configuration de ces interfaces, de définition de règles de pare-feu relatives à ces interfaces, ou plus généralement d'utilisation de ces interfaces. De manière à ne pas permettre de perturber les prestations offertes via ces interfaces à cause d'une configuration indésirable requise par un client non concerné par ces prestations, le serveur 101 sélectionne les services exportés à chacun des clients. Cela permet de s'assurer par exemple qu'un accès à un service relatif à l'interface TV ne soit pas autorisé à un PC. Le comportement du serveur 101 est plus particulièrement détaillé ci-après en relation avec les Figs. 3 et 5.

La Fig. 2 illustre schématiquement un exemple d'architecture du serveur 101, qui comporte alors, reliés par un bus de communication 210 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; une unité de stockage ou un lecteur de support de stockage, tel qu'un disque dur HDD (« Hard Disk Drive » en anglais) 203 ; une première interface de communication 204 permettant de communiquer via le premier réseau de communication 100 ; et éventuellement une seconde interface de communication 205 permettant de communiquer via le second réseau de communication 120.

Le processeur 200 est capable d'exécuter des instructions chargées dans la RAM 201 à partir de la ROM 202, d'une mémoire externe (non représentée), d'un support de stockage, tel que le disque dur HDD 203, ou d'un réseau de communication. Lorsque le serveur 101 est mis sous tension, le processeur 200 est capable de lire de la RAM 201 des instructions et de les exécuter. Ces instructions forment un programme d'ordinateur causant la mise en œuvre, par le processeur 200, de tout ou partie des algorithmes et étapes décrits ci-après. Tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un échange de messages intervenant dans le système de la Fig. 1A ou 1B.

Dans une étape 301, le client 110 se connecte au premier réseau de communication 100. Le client 110 construit une requête visant à découvrir les serveurs connectés au premier réseau de communication 100. Dans le cadre du protocole UPnP, cette requête prend la forme d'un message M-SEARCH formaté selon le protocole HTTP (« Hypertext Transfer Protocol » tel que défini dans le document normatif RFC 2616), encapsulé dans un datagramme UDP (« User Datagram Protocol » en anglais, tel que défini dans le document normatif RFC 768) destiné à l'adresse IP *255.255.255.250* et au port UDP *1900.*

Dans une étape 302, le client 110 émet la requête sur le premier réseau de communication 100. Cette requête est reçue par un serveur 102 (non représenté sur les Figs. 1A et 1B) dans une étape 303, et par le serveur 101 dans une étape 306. En effet, la requête étant diffusée vers une adresse IP et un port UDP auquel chacun des serveurs est abonné selon le protocole UPnP, la requête est reçue par chacun des serveurs connectés au premier réseau de communication 100.

Dans l'étape 303, le serveur 102 construit une réponse à la requête émise par le client 110, dans laquelle il indique sa présence sur le réseau de communication 100. Selon le protocole UPnP, la réponse prend la forme d'un datagramme UDP adressé au client 110, dont l'adresse IP est extraite de la requête. La réponse précise une URL (« Uniform Resource Locator » en anglais) à partir de laquelle une description de services mis en œuvre par le serveur 102 est accessible. Dans une étape 304, le serveur 102 émet cette réponse sur le réseau de communication 100. Cette réponse est reçue et traitée par le client 110 dans une étape 305.

Dans l'étape 306, le serveur 101 construit aussi une réponse à la requête émise par le client 110, dans laquelle il indique sa présence sur le réseau de communication 100. De la même manière, la réponse précise une URL à partir de laquelle une description d'éventuels services mis à disposition du client 110 par le serveur 101 est accessible. Afin de déterminer quelle description de services rendre accessible au client 110, le serveur 101 obtient préalablement le type du client 110. En fonction du type du client 110, et selon des règles prédéterminées au sein du serveur 101, le serveur 101 sélectionne les services à présenter dans cette description.

Les règles prédéterminées au sein du serveur 101 associent, pour un type de client, au moins un service mis à disposition par le serveur 101 via le premier réseau de communication. Les règles prédéterminées peuvent être prédéfinies, par exemple, ce sont des paramètres usine implantés lors de la fabrication du serveur 101. Ces règles peuvent aussi être mises à jour par l'opérateur fournisseur d'accès Internet via le second réseau de communication 120, ou via des moyens de stockage à faire lire par le serveur 101. Par exemple, lorsque le serveur 101 est une passerelle domestique, les règles prédéterminées définissent qu'un client de type PC ne peut accéder qu'à l'interface DATA et que le serveur ne lui exporte en conséquence que les services qui sont relatifs à l'interface DATA. Selon un autre exemple, les règles prédéterminées définissent qu'un client de type décodeur audiovisuel ne peut accéder qu'aux interfaces DATA et TV et qu'un client de type téléphone ne peut accéder qu'aux interfaces DATA et TEL ; le serveur 101 génère la description des services en conséquence, c'est-à-dire en fonction du type du client auquel elle est adressée. D'autres types de client et d'autres règles peuvent être définis.

Pour obtenir le type du client 110, le serveur 101 peut se baser sur l'adresse MAC (« Medium Access Control » en anglais) des trames Ethernet dans lesquelles les requêtes UDP et/ou TCP sont encapsulées. Cette adresse MAC permet d'identifier le fabricant du client, ce qui peut donner une indication du type de client. Le serveur 101 peut aussi se baser sur des tables de correspondance entre adresses MAC et types de client, mises à jour lors d'une phase d'initialisation du serveur 101. Par exemple, l'utilisateur peut indiquer au serveur 101 une telle correspondance, ou brancher les clients les uns après les autres, en indiquant après branchement le type de client, afin que le serveur 101 puisse construire cette correspondance. Pour obtenir le type du client 110, le serveur 101 peut aussi se baser sur des options comprises dans des messages au format DHCP (« Dynamic Host Configuration Protocol » en anglais, tel que défini dans le document normatif RFC 2131) échangés sur le premier réseau de communication 100. Le serveur 101 peut aussi se baser sur une détection de séquence de trames Ethernet, IP, TCP et/ou UDP, échangées sur le réseau de communication et révélatrices du type de dispositif les ayant émises. A défaut d'information contraire, le serveur 101 peut associer un client à un type prédéfini, par exemple le type PC.

Dans un mode de réalisation particulier, le serveur 101 reçoit via le second réseau de communication 120 une information indiquant le type d'au moins un client connecté au premier réseau de communication 100. En reprenant l'exemple où le serveur 101 est un dispositif d'interconnexion ou une passerelle domestique, un client de type décodeur audiovisuel va se connecter à des serveurs de l'opérateur fournisseur d'accès Internet connectés au second réseau de communication 120. Une liaison SSL (« Secure Sockets Layer » en anglais, tel que défini dans le document normatif RFC 6101) ou TLS (« Transport Layer Security » en anglais, tel que défini dans le document normatif RFC 5246) est alors établie entre le client et le serveur de l'opérateur via la passerelle domestique, ce qui permet au client de se déclarer auprès du serveur de l'opérateur. Le serveur de l'opérateur peut récupérer ainsi un identifiant du client, tel que son adresse MAC. Le serveur de l'opérateur peut alors informer la passerelle domestique de cet identifiant et lui indiquer le type du client.

Dans une étape 307, le serveur 101 émet la réponse construite à l'étape 306 sur le réseau de communication 100. Cette réponse est reçue et traitée par le client 110 dans une étape 308.

En considérant que le client 110 soit intéressé d'obtenir la liste des services mis à disposition par le serveur 101, le client 110 construit une requête visant à obtenir cette liste de services. Selon le protocole UPnP, la réponse prend la forme d'un message HTTP GET référant à l'URL fournie par le serveur 101 et encapsulé dans une ou plusieurs trames TCP (« Transmission Control Protocol » en anglais, tel que défini dans le document normatif RFC 793) adressées au serveur 101. Dans une étape 309, le client 101 émet la requête sur le premier réseau de communication 100. Cette requête est reçue par le serveur 101 dans une étape 310.

Dans l'étape 310, le serveur 101 construit une réponse à cette requête. La réponse comporte la description de chaque service sélectionné à l'étape 306. Si aucun service ne correspond au type du client 110, la réponse comporte un code d'erreur.

Dans une étape 311, le serveur 101 émet cette réponse sur le réseau de communication 100. Cette réponse est reçue et traitée par le client 110 dans une étape 312. Ainsi, le client 110 n'obtient qu'une description de chaque service qu'il est autorisé à accéder. Le traitement effectué par le serveur 101 en ce qui concerne l'accès à un service par un client est détaillé ci-après en relation avec la Fig. 5.

Dans un mode de réalisation particulier, le serveur 101 doit périodiquement annoncer les services qu'il met à disposition via le premier réseau de communication 100. Cela dépend du protocole de découverte de services mis en œuvre entre les serveurs et clients ; tel est le cas par exemple du protocole UPnP. Cet aspect est détaillé ci-après en relation avec la Fig. 4.

Dans un autre mode de réalisation particulier, un client peut requérir une désactivation de services auprès du serveur 101. Lorsqu'il reçoit une telle requête, le serveur 101 détermine quel est le type du client ayant émis la requête et désactive les services pour lesquels le client est autorisé à accéder, en fonction des règles prédéterminées au sein du serveur 101, d'après son type. Lorsque le serveur 101 est adapté pour périodiquement annoncer les services qu'il met à disposition via le premier réseau de communication 100, le serveur 101 stoppe l'émission de telles annonces. Les autres services du serveur 101 demeurent accessibles aux clients et une description de services leur est fournie par le serveur 101 sur requête, de la même manière que dans les étapes 308 à 312. Cela permet une désactivation partielle des services du serveur 101, et cela permet notamment, dans le cadre de l'exemple de la passerelle domestique déjà mentionné, de ne désactiver que l'interface concernée. L'utilisateur peut ainsi désactiver les services liés à l'interface TEL sans désactiver les services liés à l'interface TV.

La Fig. 4 illustre schématiquement un algorithme d'annonce de services. L'algorithme est mis en œuvre par le serveur 101.

Dans une étape 401, le serveur 101 détermine chaque service, parmi les services que le serveur 101 met à disposition via le premier réseau de communication 100, accessible par tous les clients connectés au premier réseau de communication 100. Pour ce faire, le serveur 101 détermine le type de chacun des clients connectés au premier réseau de communication et détermine les services à exporter en fonction desdites règles prédéterminées et des types des clients. Le serveur 101 construit alors une description limitée aux services accessibles en commun.

Dans une étape 402, le serveur 101 annonce ces services aux clients connectés au premier réseau de communication 100 par diffusion de cette description. Cette annonce peut être effectuée de manière périodique ou pseudopériodique, par exemple toutes les deux à trois minutes. Selon le protocole UPnP, une telle annonce prend la forme d'un message NOTIFY formaté selon le protocole HTTP, encapsulé dans un datagramme UDP destiné à l'adresse IP *255.255.255.250* et au port UDP *1900.*

La Fig. 5 illustre schématiquement un algorithme de traitement d'une requête d'accès à un service. L'algorithme est mis en œuvre par le serveur 101.

Dans une étape 501, le serveur 101 reçoit une requête d'accès à un service. Dans une étape 502 suivante, le serveur 101 détermine le type du client en provenance duquel la requête est reçue.

Dans une étape 503 suivante, le serveur 101 vérifie si le type du client est en accord, selon les règles prédéterminées au sein du serveur 101, avec le service concerné par la requête. Si tel est le cas, dans une étape 504, le serveur 101 autorise le client à accéder au service concerné par la requête. Sinon, dans une étape 505, le serveur 101 n'autorise pas le client à accéder au service concerné par la requête et transmet au client une réponse comportant un code d'erreur notifiant un rejet. Selon le protocole UPnP, la requête et la réponse prennent la forme de messages au format SOAP (« Simple Object Access Protocol » en anglais) et encapsulés dans une ou plusieurs trames TCP adressées au serveur 101.

## Revendications

1. Dispositif (101) destiné à mettre à disposition au moins un service, dans un premier réseau de communication (100), à au moins un client (110 ; 111 ; 112) connecté audit premier réseau de communication, tel qu'il comporte :
- des moyens pour déterminer (401), pour ledit au moins un client, un type de client, le type d'un client étant représentatif des fonctionnalités mises en œuvre par ce client ;
- des moyens pour ne sélectionner (306), en fonction de règles prédéterminées, parmi ledit au moins un service mis à disposition par ledit dispositif, que le service ou les services qui correspondent au type dudit au moins un client auquel une description de services est destinée à être exportée, lesdites règles prédéterminées associant, pour un type de client, au moins un service parmi ledit service ou lesdits services mis à disposition par ledit dispositif ;
- des moyens pour construire ladite description de services, ladite description de services étant limitée audit service sélectionné ou auxdits services sélectionnés et
- des moyens pour exporter (311) vers ledit au moins un client ladite description de services construite, ladite description de services décrivant ledit service sélectionné ou lesdits services sélectionnés.

2. Dispositif selon la revendication 1, **caractérisé en ce qu'**il comporte :
- des moyens pour recevoir (501) une requête d'accès à un dit service ;
- des moyens pour déterminer (502) le type d'un client ayant émis ladite requête d'accès ; et
- des moyens pour décider (503, 504, 505) d'autoriser ou pas audit client l'accès audit service, en fonction desdites règles prédéterminées et dudit type dudit client.

3. Dispositif selon l'une quelconque des revendications 1 à 2, **caractérisé en ce qu'**il comporte :
- des moyens pour recevoir une requête de désactivation des services mis à disposition par ledit dispositif ;
- des moyens pour déterminer le type d'un client ayant émis ladite requête de désactivation des services ; et
- des moyens pour désactiver, en réponse à ladite requête de désactivation des services, les services associés, selon lesdites règles prédéterminées, audit type dudit client.

4. Dispositif selon l'une quelconque des revendications 1 à 3, **caractérisé en ce qu'**il comporte :
- des moyens pour recevoir (309) une requête de description de services ;
- des moyens pour déterminer le type d'un client ayant émis ladite requête de description de services ;
- des moyens pour construire (310) ladite description de services en fonction dudit type du client ; et
- des moyens pour transmettre (311) la description de services construite, en réponse à ladite requête.

5. Dispositif selon l'une quelconque des revendications 1 à 4, **caractérisé en ce que** les moyens pour obtenir, pour ledit au moins un client, le type du client sont adaptés pour déterminer le type dudit au moins un client en fonction :
- d'adresses MAC dans des trames Ethernet échangées via le premier réseau de communication ; et/ou
- d'options comprises dans des messages DHCP échangés via le premier réseau de communication ; et/ou
- de séquences de trames échangées via le premier réseau de communication.

6. Dispositif selon l'une quelconque des revendications 1 à 5, **caractérisé en ce que** ledit dispositif est un dispositif d'interconnexion ou est destiné à être intégré dans un dispositif d'interconnexion, ledit dispositif d'interconnexion étant destiné à interconnecter ledit premier réseau de communication avec un second réseau de communication (120), chaque service étant relatif à une interface (131 ; 132 ; 133) dudit dispositif d'interconnexion avec ledit second réseau de communication.

7. Dispositif selon la revendication 6, **caractérisé en ce qu'**il comporte des moyens pour recevoir via le second réseau de communication une information indiquant le type d'au moins un client connecté audit premier réseau de communication.

8. Dispositif selon l'une quelconque des revendications 1 à 7, **caractérisé en ce que** lesdits services sont conformes à la norme UPnP.

9. Procédé de mise à disposition d'au moins un service, dans un réseau de communication (100), à au moins un client (110 ; 111 ; 112) connecté audit réseau de communication, tel qu'un dispositif effectue les étapes suivantes :
- déterminer, pour ledit au moins un client, un type de client, le type d'un client étant représentatif des fonctionnalités mises en œuvre par ce client ;
- ne sélectionner (306), en fonction de règles prédéterminées, parmi ledit au moins un service mis à disposition par ledit dispositif, que le ou les services qui correspondent au type dudit au moins un client auquel une description de services est destinée à être exportée, lesdites règles prédéterminées associant, pour un type de client, au moins un service parmi ledit service ou lesdits services mis à disposition par ledit dispositif;
- construire ladite description de services, ladite description de services étant limitée audit service sélectionné ou auxdits services sélectionnés et
- exporter (311) vers ledit au moins un client ladite description de services construite, ladite description de services décrivant ledit service sélectionné ou lesdits services sélectionnés.

10. Programme d'ordinateur **caractérisé en ce qu'**il comprend des instructions pour mettre en œuvre, par un dispositif, le procédé selon la revendication 9, lorsque ledit programme est exécuté par une unité de calcul dudit dispositif.

11. Moyens de stockage **caractérisés en ce qu'**ils stockent un programme d'ordinateur comprenant des instructions pour mettre en œuvre, par un dispositif, le procédé selon la revendication 9, lorsque ledit programme est exécuté par une unité de calcul dudit dispositif.

## Patentansprüche

1. Vorrichtung (101), die dazu bestimmt ist, in einem ersten Kommunikationsnetz (100) mindestens einem Client (110; 111; 112), der mit dem ersten Kommunikationsnetz verbunden ist, mindestens einen Dienst bereitzustellen, wobei sie hierzu Folgendes umfasst:
- Mittel zum Bestimmen (401), für den mindestens einen Client, eines Client-Typs, wobei der Typ eines Clients für die durch diesen Client umgesetzten Funktionen repräsentativ ist;
- Mittel (306), um, in Abhängigkeit von vorgegebenen Regeln, aus dem mindestens einen Dienst, der durch die Vorrichtung bereitgestellt wird, ausschließlich den Dienst oder die Dienste auszuwählen, die dem Typ des mindestens einen Clients entsprechen, an den eine Dienstebeschreibung exportiert werden soll, wobei die vorgegebenen Regeln mindestens einen Dienst aus dem Dienst oder den Diensten, die durch die Vorrichtung bereitgestellt werden, mit einem Client-Typ assoziieren;
- Mittel zum Erstellen der Dienstebeschreibung, wobei die Dienstebeschreibung auf den ausgewählten Dienst oder die ausgewählten Dienste begrenzt ist, und
- Mittel zum Exportieren (311), an den mindestens einen Client, der erstellten Dienstebeschreibung, wobei die Dienstebeschreibung den ausgewählten Dienst oder die ausgewählten Dienste beschreibt.

2. Vorrichtung nach Anspruch 1, **dadurch gekennzeichnet, dass** sie Folgendes umfasst:
- Mittel zum Empfangen (501) einer Anforderung nach Zugriff auf einen Dienst;
- Mittel zum Bestimmen (502) des Typs eines Clients, der die Zugriffsanforderung ausgegeben hat; und
- Mittel zum Entscheiden (503, 504, 505), in Abhängigkeit von den vorgegebenen Regeln und dem Typ des Clients, ob dem Client Zugriff auf den Dienst gewährt werden soll oder nicht.

3. Vorrichtung nach einem beliebigen der Ansprüche 1 bis 2, **dadurch gekennzeichnet, dass** sie Folgendes umfasst:
- Mittel zum Empfangen einer Anforderung nach Deaktivierung der durch die Vorrichtung bereitgestellten Dienste;
- Mittel zum Bestimmen des Typs eines Clients, der die Anforderung nach Deaktivierung der Dienste ausgegeben hat; und
- Mittel zum Deaktivieren, als Reaktion auf die Anforderung nach Deaktivierung der Dienste, derjenigen Dienste, die gemäß den vorgegebenen Regeln mit dem Typ des Clients assoziiert sind.

4. Vorrichtung nach einem beliebigen der Ansprüche 1 bis 3, **dadurch gekennzeichnet, dass** sie Folgendes umfasst:
- Mittel zum Empfangen (309) einer Dienstebeschreibungsanforderung;
- Mittel zum Bestimmen des Typs eines Clients, der die Dienstebeschreibungsanforderung ausgegeben hat;
- Mittel zum Erstellen (310) der Dienstebeschreibung in Abhängigkeit von dem Typ des Clients; und
- Mittel zum Übertragen (311) der erstellten Dienstebeschreibung als Reaktion auf die Anforderung

5. Vorrichtung nach einem beliebigen der Ansprüche 1 bis 4, **dadurch gekennzeichnet, dass** die Mittel zum Erhalten, für den mindestens einen Client, des Typs des Clients dazu angepasst sind, den Typ des mindestens einen Clients in Abhängigkeit von Folgendem zu bestimmen:
- MAC-Adressen in Ethernet-Frames, die über das erste Kommunikationsnetz ausgetauscht werden; und/oder
- Optionen, die in DHCP-Nachrichten enthalten sind, die über das erste Kommunikationsnetz ausgetauscht werden; und/oder
- Frame-Sequenzen, die über das erste Kommunikationsnetz ausgetauscht werden.

6. Vorrichtung nach einem beliebigen der Ansprüche 1 bis 5, **dadurch gekennzeichnet, dass** die Vorrichtung eine Verbindungsvorrichtung ist oder dazu bestimmt ist, in eine Verbindungsvorrichtung integriert zu werden, wobei die Verbindungsvorrichtung dazu bestimmt ist, das erste Kommunikationsnetz mit einem zweiten Kommunikationsnetz (120) zu verbinden, wobei sich jeder Dienst auf eine Schnittstelle (131; 132; 133) der Verbindungsvorrichtung mit dem zweiten Kommunikationsnetz bezieht.

7. Vorrichtung nach Anspruch 6, **dadurch gekennzeichnet, dass** sie Mittel zum Empfangen, über das zweite Kommunikationsnetz, einer Information umfasst, die den Typ mindestens eines Clients angibt, der mit dem ersten Kommunikationsnetz verbunden ist.

8. Vorrichtung nach einem beliebigen der Ansprüche 1 bis 7, **dadurch gekennzeichnet, dass** die Dienste dem UPnP-Standard entsprechen.

9. Verfahren zur Bereitstellung mindestens eines Dienstes, in einem Kommunikationsnetz (100), für mindestens einen Client (110; 111; 112), der mit dem Kommunikationsnetz verbunden ist, wobei eine Vorrichtung hierzu die folgenden Schritte ausführt:
- Bestimmen, für den mindestens einen Client, eines Client-Typs, wobei der Typ eines Clients für die durch diesen Client umgesetzten Funktionen repräsentativ ist;
- ausschließliches Auswählen (306), in Abhängigkeit von vorgegebenen Regeln, aus dem mindestens einen Dienst, der durch die Vorrichtung bereitgestellt wird, nur des oder der Dienste, die dem Typ des mindestens einen Clients entsprechen, an den eine Dienstebeschreibung exportiert werden soll, wobei die vorgegebenen Regeln mindestens einen Dienst aus dem Dienst oder den Diensten, die durch die Vorrichtung bereitgestellt werden, mit einem Client-Typ assoziieren;
- Erstellen der Dienstebeschreibung, wobei die Dienstebeschreibung auf den ausgewählten Dienst oder die ausgewählten Dienste begrenzt ist, und
- Exportieren (311), an den mindestens einen Client, der erstellten Dienstebeschreibung, wobei die Dienstebeschreibung den ausgewählten Dienst oder die ausgewählten Dienste beschreibt.

10. Computerprogramm, **dadurch gekennzeichnet, dass** es Anweisungen zum Umsetzen des Verfahrens nach Anspruch 9 durch eine Vorrichtung beinhaltet, wenn das Programm durch eine Recheneinheit der Vorrichtung ausgeführt wird.

11. Speichermittel, **dadurch gekennzeichnet, dass** sie ein Computerprogramm speichern, das Anweisungen zum Umsetzen des Verfahrens nach Anspruch 9 durch eine Vorrichtung beinhaltet, wenn das Programm durch eine Recheneinheit der Vorrichtung ausgeführt wird.

## Claims

1. Device (101) intended to make available at least one service, in a first communication network (100), to at least one client (110; 111; 112) connected to said first communication network, so that it comprises:
- means for determining (401), for said at least one client, a client type, the type of client representing functionalities used by this client;
- means for selecting (306), according to predetermined rules, from said at least one service made available by said device, only the service or services that correspond to the type of said at least one client to which a description of services is intended to be exported, said predetermined rules associating, for a type of client, at least one service from said service or services made available by said device;
- means for constructing said description of services, said description of services being limited to said selected service or services; and
- means for exporting (311) to said at least one client said constructed description of services, said description of services describing said selected service or services.

2. Device according to claim 1, **characterised in that** it comprises:
- means (501) for receiving a request for access to a said service;
- means (502) for determining the type of client that sent said access request; and
- means (503, 504, 505) for deciding whether or not to authorise said client to have access to said service, according to said predetermined rules and said type of said client.

3. Device according to either one of claims 1 to 2, **characterised in that** it comprises:
- means for receiving a request for deactivation of the services made available by said device;
- means for determining the type of client that sent said service deactivation request; and
- means for deactivating, in response to said service deactivation request, the services associated, in accordance with said predetermined rules, with said type of said client.

4. Device according to any one of claims 1 to 3, **characterised in that** it comprises:
- means (309) for receiving a service description request;
- means for determining the type of client that sent said service description request;
- means (310) for constructing said service description according to said type of client; and
- means (311) for transmitting the service description constructed, in response to said request.

5. Device according to any one of claims 1 to 4, **characterised in that** the means for obtaining, for said at least one client, the client type are adapted to determine the type of said at least one client according to:
- MAC addresses in Ethernet frames exchanged via the first communication network; and/or
- options included in DHCP messages exchanged via the first communication network; and/or
- sequences of frames exchanged via the first communication network.

6. Device according to any one of claims 1 to 5, **characterised in that** said device is an interconnection device or is intended to be integrated in an interconnection device, said interconnection device being intended to interconnect said first communication network with a second communication network (120), each service relating to an interface (131; 132; 133) of said interconnection device with said second communication network.

7. Device according to claim 6, **characterised in that** it comprises means for receiving, via the second communication network, information indicating the type of at least one client connected to said first communication network.

8. Device according to any one of claims 1 to 7, **characterised in that** said services are in accordance with the UPnP standard.

9. Method for making available at least one service, in a first communication network (100), to at least one client (110; 111; 112) connected to said first communication network, such that a device performs the following steps::
- determining, for said at least one client, a client type, the type of client representing functionalities used by this client;
- selecting (306), according to predetermined rules, from said at least one service made available by said device, only the service or services that correspond to the type of said at least one client to which a description of services is intended to be exported, said predetermined rules associating, for a type of client, at least one service from said service or services made available by said device;
- constructing said description of services, said description of services being limited to said selected service or services; and
- means for exporting (311) to said at least one client said constructed description of services, said description of services describing said selected service or services.

10. Computer program, **characterised in that** it comprises instructions for implementing, by a device, the method according to claim 9, when said program is executed by a computing unit of said device.

11. Storage means, **characterised in that** they store a computer program that comprises instructions for implementing, by a device, the method according to claim 9, when said program is executed by a computing unit of said device.
